(19) Europäisches Patentamt

European Patent Office

Office européen des brevets

(11) **EP 4 685 655 A1**

(12) **EUROPEAN PATENT APPLICATION**

(43) Date of publication:
**28.01.2026 Bulletin 2026/05**

(21) Application number: **25191228.3**

(22) Date of filing: **23.07.2025**

(51) International Patent Classification (IPC):
**G06F 12/02** *(2006.01)*

(52) Cooperative Patent Classification (CPC):
**G06F 12/0246;** G06F 2212/1016; G06F 2212/1044;
G06F 2212/7203; G06F 2212/7204

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.07.2024 IN 202441056747
01.07.2025 IN 202441056747**

(71) Applicant: **Samsung Electronics Co., Ltd.
Suwon-si, Gyeonggi-do 16677 (KR)**

(72) Inventors:
• **BALAKRISHNAN, Rakesh
560048 Bengaluru, Karnataka (IN)**
• **TANGELLA, Manoj Kumar
560048 Bengaluru, Karnataka (IN)**
• **KAUSHAL, Sudeep
560048, Bengaluru, Karnataka (IN)**
• **PASUMARTHI, Akarsh
560048 Bengaluru, Karnataka (IN)**

(74) Representative: **Kuhnen & Wacker
Patent- und Rechtsanwaltsbüro PartG mbB
Prinz-Ludwig-Straße 40A
85354 Freising (DE)**

(54) **METHOD AND SYSTEM FOR MANAGING LARGE DATA STREAM IN A STORAGE DEVICE**

(57)    A method includes initiating writing of a large data stream in a dynamic high-performance NAND memory region (112) of a storage device (104), and migrating, via one or both of the dynamic high-performance NAND memory region (112) and a static high-performance NAND memory region (110) of the storage device (104), writing of the large data stream to a lowperformance NAND memory region (114) of the storage device (104) based on a fill ratio of the storage device (104) and an adaptive data writing threshold limit of the dynamic high-performance NAND memory region (112).

FIG. 3

EP 4 685 655 A1

**Description**

BACKGROUND

The present disclosure relates to the field of memory storage devices and, more specifically, to a method and a system for managing a large data stream in a storage device.

A Solid-state drive (SSD) technology has advanced significantly to meet the growing demand for high-speed data storage and retrieval in modern computing environments. Unlike traditional hard disk drives (HDDs), the SSD technology utilizes flash memory for data storage, offering several advantages, including faster access times, lower latency, and improved durability. In related art SSD systems, data may be migrated among memory regions.

SUMMARY

According to an aspect of one or more embodiments, there is provided a method comprising initiating writing of a large data stream in a dynamic high-performance NAND memory region of a storage device; and migrating, via at least one of the dynamic high-performance NAND memory region or a static high-performance NAND memory region of the storage device, writing of the large data stream to a low-performance NAND memory region of the storage device based on a fill ratio of the storage device and an adaptive data writing threshold limit of the dynamic high-performance NAND memory region.

According to another aspect of one or more embodiments, there is provided a system comprising a memory controller configured to initiate writing of a large data stream in a dynamic high-performance NAND memory region of a storage device; and migrate, via at least one of the dynamic high-performance NAND memory region or a static high-performance NAND memory region of the storage device, writing of the large data stream to a low-performance NAND memory region of the storage device, based on a fill ratio of the storage device and an adaptive data writing threshold limit of the dynamic high-performance NAND memory region.

According to yet another aspect of one or more embodiments, there is provided a non-transitory computer readable storage medium storing a program which, when executed by a processor, cause the processor to initiate writing of a large data stream in a dynamic high-performance NAND memory region of a storage device; and migrate, via at least one of the dynamic high-performance NAND memory region or a static high-performance NAND memory region of the storage device, writing of the large data stream to a low-performance NAND memory region of the storage device, based on a fill ratio of the storage device and an adaptive data writing threshold limit of the dynamic high-performance NAND memory region.

BRIEF DESCRIPTION OF DRAWINGS

The above and other aspects will be understood based on the description that follows taking in conjunction with the drawings, in which:

FIG. 1 illustrates an exemplary computing device for implementing a system that manages a large data stream in a storage device, in accordance with an embodiment;
FIG. 2 illustrates a system for managing a large data stream in a storage device, in accordance with an embodiment;
FIG. 3 illustrates migration of a data stream, in accordance with an embodiment;
FIG. 4 depicts a flow diagram of a method for managing a large data stream in a storage device, in accordance with an embodiment; and
FIG. 5 illustrates a block diagram of an exemplary computer system, in accordance with some embodiments.

DETAILED DESCRIPTION

In related art SSD systems, three primary types of memory regions are commonly used: static high-performance NAND memory regions, dynamic high-performance NAND memory regions, and low-performance NAND memory regions. During data write operations, data is initially written to the static and dynamic high-performance NAND memory regions to handle high-priority tasks and ensure optimal performance. Once the static and dynamic high-performance NAND memory regions reach their capacity, the data is migrated to the low-performance NAND memory region, which provides a larger storage capacity but is less efficient for frequent or random access operations.

The related art SSD systems face several disadvantage. One disadvantage arises during burst sequential write operations, where users expect write speeds of 5-10 GB/s, such as when downloading large files like movies. To accommodate these bursts, data must be migrated from the static and dynamic high-performance NAND memory regions to the low-performance NAND memory region. This migration process, however, can inadvertently impact the read performance of recently written data, as the low-performance NAND memory region is less efficient for random or low-queue-depth read operations.

Another disadvantage occurs when large data streams occupy available dynamic high-performance NAND memory regions. In such scenarios, smaller write operations, such as write operations generated by applications like Photoshop or Word, are redirected to the static high-performance NAND memory regions. Once the high-performance NAND memory regions are exhausted, the data is moved to the low-performance NAND memory region to free up space. This cascading effect not only impacts the write speed of small operations but also degrades the read performance of recently written data, resulting in suboptimal read performance and thus user experiences for applications requiring real-time responsiveness.

In an additional disadvantage, when data from different streams are mixed during migration to low-performance NAND memory regions, the sequential order of the data is lost. As a result, when parts of the data are trimmed or invalidated, only portions of the storage region are freed, leaving the rest of the storage region occupied with fragmented data. This loss of sequential order complicates block management and requires additional garbage collection processes, which further degrade the overall system performance.

Aspects described below address these and other disadvantages of the related art.

Various embodiments will now be described more fully hereinafter with reference to the accompanying drawings, in which some, but not all embodiments are shown. Indeed, various aspects may be embodied in many different forms and should not be construed as limited to the embodiments set forth herein. Rather, these embodiments are provided so that this disclosure will satisfy applicable legal requirements.

The term "or" is used herein in both the alternative and conjunctive sense, unless otherwise indicated. As used in this specification, a phrase using the form "at least one of A or B" includes within its scope "only A", "only B", and "A and B."

The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase may be included in at least one embodiment of the present disclosure and may be included in more than one embodiment of the present disclosure (however, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

Turning now to the drawings, the detailed description set forth below in connection with the appended drawings is intended as a description of various configurations and is not intended to represent the only configurations in which the concepts described herein may be practiced. The detailed description includes specific details for the purpose of providing a thorough understanding of various concepts with like numerals denote like components throughout the several views. However, it will be apparent to those skilled in the art that these concepts may be practiced without these specific details.

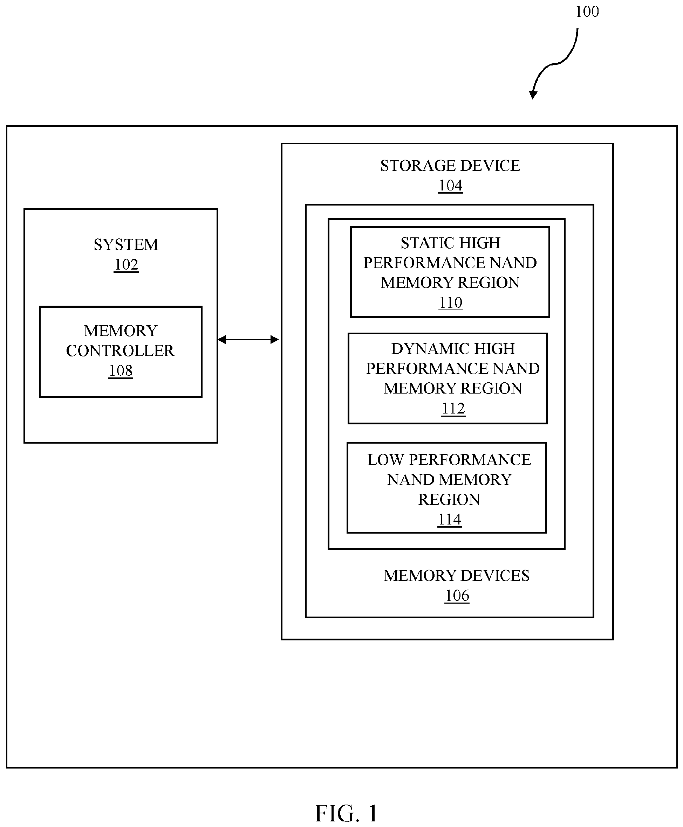

FIG. 1 illustrates a computing device 100 for implementing a system that manages large data stream in a storage device, in accordance with an embodiment. In an embodiment, the computing device 100 may include a system 102 and a storage device 104. In some embodiments, the computing device 100 may include more constituent elements than the constituent elements illustrated in FIG. 1. However, the more constituent elements are not explained for the sake of brevity.

In an embodiment, the computing device 100 may be, but is not limited to, a desktop computer, laptop computer, server, network server, mobile device, a vehicle (e.g., airplane, drone, train, automobile, or other conveyance), Internet of Things (IoT) enabled device, embedded computer (e.g., one included in a vehicle, industrial equipment, or a networked commercial device), and/or such computing device that includes memory and a processing device.

In an embodiment, the storage device 104 may include, but is not limited to, a solid-state drive (SSD), a flash drive, a universal serial bus (USB) flash drive, an embedded Multi-Media Controller (eMMC) drive, a Universal Flash Storage (UFS) drive, a secure digital (SD) card, and/or a hard disk drive (HDD). Examples of memory modules include a dual in-line memory module (DIMM), a small outline DIMM (SO-DIMM), and/or various types of non-volatile dual in-line memory modules (NVDIMMs).

In an embodiment, the system 102 can be coupled to the storage device 104 via a physical host interface. The physical host interface may be, but is not limited to, a serial advanced technology attachment (SATA) interface, a peripheral component interconnect express (PCIe) interface, a universal serial bus (USB) interface, a Fibre Channel, a Small Computer System Interface (SCSI), a Serial Attached SCSI (SAS), a double data rate (DDR) memory bus, a dual in-line memory module (DIMM) interface (e.g., DIMM socket interface that supports Double Data Rate (DDR)), an Open NAND Flash Interface (ONFI), and/or Low Power Double Data Rate (LPDDR). The physical host interface may be used to transmit data between the system 102 and the storage device 104. The system 102 may further utilize an NVM Express (NVMe) interface to access components (e.g., memory devices 106) when the storage device 104 is coupled with the system 102 by the PCIe interface.

In an embodiment, the memory devices 106 may include a static high-performance NAND memory region 110, a dynamic high-performance NAND memory region 112, and a low-performance NAND memory region 114. In an embodiment, each of the static high-performance NAND memory region 110, the dynamic high-performance NAND memory region 112, and the low-performance NAND memory region 114 corresponds to a memory device of the memory devices 106.

In an exemplary embodiment, the high-performance NAND memory region 110 may be blocks of single-level cell (SLC) and the low-performance NAND memory region 114 may be blocks of quad-level cell (QLC).

In an embodiment, the SLC may be a type of NAND flash memory where each cell stores a single bit of data. The SLC may be used for high performance applications requiring durability, such as caching and industrial systems. In an embodiment, the QLC may be a type of NAND flash memory where each cell stores four bits of data. The QLC may be used for applications requiring high storage capacity but less speed and endurance. Here, the term "used for" may mean that the SLC or QLC stores information related to the application.

In an embodiment, the static high-performance NAND memory region 110 may represents blocks of SLC memory cell. The SLC memory cell may be small in size, have a fixed lifetime, and deliver fast read and write speeds. In an embodiment, the dynamic high-performance NAND memory region 112 may be variable in size and lifetime. Unlike the static high-performance NAND memory region 110, the dynamic high-performance NAND memory region 112 may adapt a configuration based on system requirements, workload patterns, and/or available resources. The dynamic high-performance NAND memory region 112 may have fast read/write speeds. In an embodiment, the low-performance NAND memory region 114 may present blocks of QLC memory cell. The QLC memory cell may have a large storage capacity with fixed lifetime and slow read/write speeds.

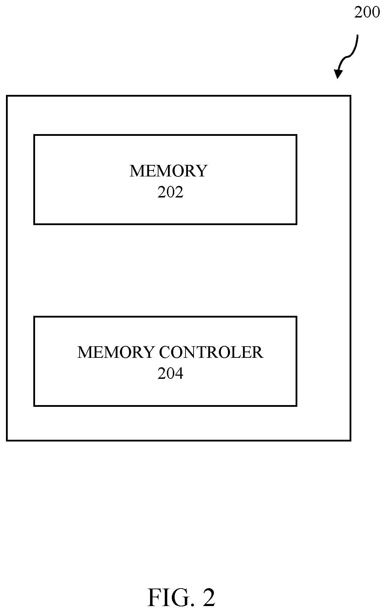

In an embodiment, the system 102 may comprise a memory controller 108 communicating with the memory devices 106 to perform operations such as reading data, writing data, and/or erasing data at the memory devices 106, and/or other such operations. The memory controller 116 may include hardware such as one or more integrated circuits and/or discrete components, a buffer memory, or a combination thereof. The hardware can include digital circuitry with dedicated (i.e., hard-coded) logic to perform the operations described herein. The memory controller 108 may be a microcontroller, special purpose logic circuitry (e.g., a field programmable gate array (FPGA), an application specific integrated circuit (ASIC), etc.), and/or other suitable processor. The detailed functioning of the system 102, in conjunction with other elements disclosed in Fig. 1, is further explained with respect to Fig. 2 in forthcoming paragraphs.

FIG. 2 illustrates a system for managing a large data stream in a storage device, in accordance with an embodiment. In an embodiment, system 200 for managing large data stream in a storage device 104 may correspond to the system 102 of FIG.1.

According to an embodiment, the system 200 may include a memory 202 and a memory controller 204. In an embodiment, the memory controller 204 may correspond to the memory controller 108 of FIG. 1. In some embodiments, the system 200 illustrated in FIG. 2 may include more additional elements than the elements illustrated in FIG. 2. However, the additional elements are not explained for the sake of brevity. All the elements of the system 200 may communicate with each other via wireless connection, electric connection, or a combination of both.

In an embodiment, the memory 202 may be configured to store instructions executed by the memory controller 204. In an exemplary embodiment, the memory 202 may be configured to store instructions for performing various processes, operations, logic flows, and/or routines that control operation of the storage device 104, including handling communications between the storage device 104 and the system 200.

With reference to FIGS. 1 and 2, in an embodiment, the computing device 100 may receive a data stream to be written into the storage device 104. After receiving the data stream, the memory controller 108 may initiate writing of the data stream in a dynamic high-performance NAND memory region 112. After the memory controller 108 initiates writing of the data stream in the dynamic high-performance NAND memory region 112, the memory controller 204 may continuously calculate a data size of the large data stream that has been written to the dynamic high-performance NAND memory region 112. The calculation of the data size may be performed using parameters such as the Valid Page Count (VPC) of a block and a total number of blocks utilized in the dynamic high-performance NAND memory region 112.

The VPC of the block may represent total valid data within a block. In an embodiment, valid data means that the system 200 has not overwritten the data and thereby the data is still valid in the block. Each block may be divided into multiple pages, and as data is written, the VPC of the current block is incremented, while the VPC of a previous/old block is decremented. By monitoring updates in real-time, the memory controller 204 may determine how much of the dynamic high-performance NAND memory region 112 may be occupied by the valid data.

In an embodiment, the memory controller 204 may keep track of the number of blocks being used for the data stream using various techniques such as, but not limited to, a sequential detection and/or a file system data identification. Since each block has a defined capacity, the memory controller 204 may multiply the number of utilized blocks by the respective capacities of the blocks (based on the VPC) to calculate the total large data stream size.

In a non-limiting example, consider a scenario where a large data stream, such as a video file, is being written to the dynamic high-performance NAND memory region 112. As the data stream is received, the memory controller 108 begins writing the data to the available blocks in the dynamic high-performance NAND memory region 112. At the same time, the memory controller 204 may continuously calculate the data size by tracking the updates to the VPC of each block. For example, as data is written to a first block, the VPC for each page within the first block is updated, and the memory controller 204 increments the total large data stream size based on the updates.

In an embodiment, at any point of time, more than one large data stream can be identified and stored in the storage device 104. In some embodiments, the data stream may include a large data stream, which refers to a sequential write-intensive workload. In some embodiments, the data stream may represent data related to application writes, which are characterized by a mixed write workload including both sequential and random data in smaller ranges. In some embodiments, the data stream may include data related to burst writes, a mixed write workload that combines sequential and random data in larger ranges.

During the continuous calculation of the data of the large data stream, the memory controller 204 may be configured to continually compare the calculated data size of the data stream that has been written to the dynamic high-performance NAND memory region 112 with an adaptive data writing threshold limit. In an embodiment, an adaptive data writing threshold limit corresponds to a dynamically adjusted maximum data size that can be written to the dynamic high-performance NAND memory region 112.

In an embodiment, the adaptive data writing threshold limit may be determined. In order to determine the adaptive data writing threshold limit, the memory controller 204 may be configured to determine the fill ratio of the storage device. The fill ratio may represent the proportion of the storage device memory that is currently in use relative to a total storage capacity of the storage device 104. The fill ratio may be calculated in real-time to provide an accurate measure of the memory utilization at any given moment. The calculation of the fill ratio involves monitoring the amount of data stored in the storage device 104, and comparing the amount of the data against the total available storage capacity of the storage device 104.

In a non-limiting example, the storage device 104 may have a total storage capacity of 1 TB, which includes multiple memory regions. At a given time, 400 GB of data is stored in the storage device 104. To determine the fill ratio, the memory controller 204 may be configured to calculate the proportion of used storage relative to the total capacity. In this case, the fill ratio may be 400 GB / 1 TB = 40%.

After determining the fill ratio, the memory controller 204 may be configured to determine an available memory storage amount of the dynamic high-performance NAND memory region 112. The available memory storage amount is determined based on the fill ratio, which is a factor in assessing the current utilization of the dynamic high-performance NAND memory region 112. The memory controller 204 may adjust the available memory storage amount of the dynamic high-performance NAND memory region 112 by considering the fill ratio. As the fill ratio varies, the variance of the fill ratio directly influences the available memory storage amount in the dynamic high-performance NAND memory region 112. The memory controller 204 may determine the available memory storage amount to be greater than or equal to a first value when the fill ratio is within a first range, and determine the available memory storage amount to be a second value when the fill ratio is within a second range. In a non-limiting example, if the fill ratio of the storage device 104 ranges from 0% to 75% as the first range, the memory controller 204 may be configured to determine that available memory storage amount of the dynamic high-performance NAND memory region 112 may be greater than or equal to 75 GB as the first value. In a non-limiting example, if the fill ratio of the storage device ranges from 76% to 85% as the second range, the memory controller 204 may be configured to determine that available memory storage amount of the dynamic high-performance NAND memory region 112 may be 48 GB as the second range. After determining both the fill ratio and available memory storage amount of the dynamic high-performance NAND memory region 112, the memory controller 204 may be configured to determine the adaptive data writing threshold limit by using the equation 1 as shown below. When the fill ratio is less than or equal to a reference value (for example, 75%), the adaptive data writing threshold limit may be a constant value as a predefined data limit, and when the fill ratio is greater than the reference value, the adaptive data writing threshold limit may be the available memory storage amount of the dynamic high-performance NAND memory region 112 divided by 3.

$$\text{threshold limit} = \begin{cases} Predefined\ data\ limit & 0 <= Fill\ ratio <= 75 \\ (\text{available memory storage amount of region 112})/3 & Fill\ ratio > 75 \end{cases}$$

(1)

In a non-limiting example, in view of the table-1 as shown below, when the fill ratio is between 0% and 75%, the available memory storage amount in the dynamic high-performance NAND memory region 112 may be greater than or equal to 75 GB. In this scenario, in an embodiment, the Sequential Data Limit may be set to 65 GB. As the fill ratio increases to the range of 76% to 85%, the available memory storage amount in the dynamic high-performance NAND memory region 112 decreases to 48 GB, and the Sequential Data Limit may be adjusted accordingly to 16 GB.

TABLE-1

| Fill Ratio | available memory storage amount of region 112 | Sequential Data Limit |
| --- | --- | --- |
| 0 to 75% | >=75 GB | 65 GB |
| 76 to 85% | 48 GB | 16 GB |

In an embodiment, the memory controller 204 may be configured to compare the continuously calculated data with the adaptive data writing threshold limit. In an embodiment, if the data size of the data stream is less than the adaptive data writing threshold limit, the memory controller 204 may be configured to write the entire data present in the data stream into the dynamic high-performance NAND memory region 112.

In some embodiments, if the size of the data stream is greater than the adaptive data writing threshold limit, the memory controller 204 may be configured to migrate the data present in the data stream. In particular, the memory controller may be configured to compare the continuously calculated data size with the adaptive data writing threshold limit. During the continuous comparison, if the memory controller 204 identifies that the calculated data size reaches the adaptive data writing threshold limit after writing at least a portion of data stream in the dynamic high-performance NAND memory region 112, the memory controller 204 may be configured to migrate the remaining portion of the data stream to the low-performance NAND memory region 114. In an embodiment, if the size of the data stream is greater than the adaptive data writing threshold limit data stream may be considered as a large data stream.

In a non-limiting example, the memory controller 204 may begin writing the data stream to the dynamic high-performance NAND memory region 112. As the data is written, the memory controller 204 may continuously calculate the size of data that has been written into the dynamic high-performance NAND memory region 112. When the total size of data written into the dynamic high-performance NAND memory region 112 reaches 65 GB, the memory controller 204 may recognize that the adaptive data writing threshold limit (i.e., 65 GB) has been reached. Upon identifying that the calculated data size has reached the threshold limit of 65 GB, the memory controller 204 may be configured to migrate the remaining portion of the data stream to the low-performance NAND memory region 114.

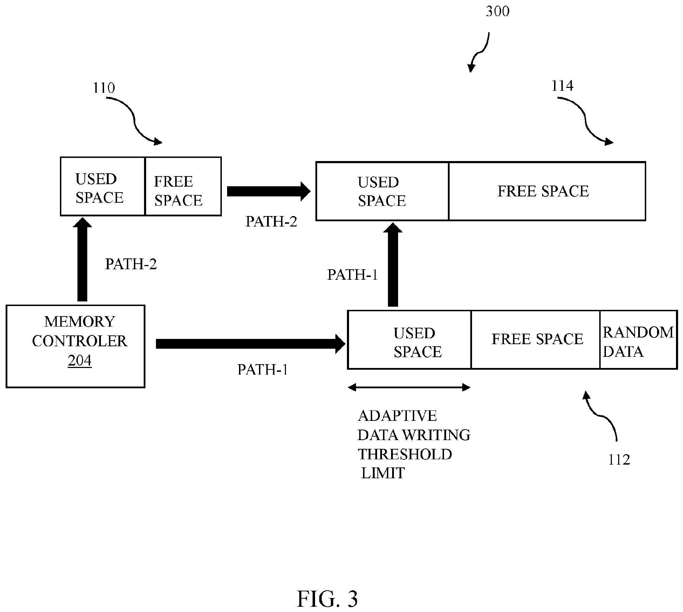

In an embodiment, the memory controller 204 may be configured to write the data stream to the dynamic high-performance NAND memory region 112, following a specific order associated with the data stream. The data stream includes segments of data that arrive in a particular order, and the memory controller 204 keeps track of the order as the memory controller 204 writes the data stream. As the data is written into the dynamic high-performance NAND memory region 112, the memory controller 204 may continuously monitor the total amount of data written into the dynamic high-performance NAND memory region 112. Once the written data reaches the threshold limit (e.g., 65 GB), the memory controller 204 recognizes that the memory controller 204 can no longer continue writing to the high-performance NAND memory region due to the threshold being reached. At this point, the memory controller 204 may migrate the remaining portion of the data stream to the low-performance NAND memory region 114. The memory controller 204 ensures that the order in which the data was originally written is maintained during the migration process. FIG. 3 illustrates migration of a data stream, in accordance with an embodiment. In an embodiment, if the memory controller 204 identifies that the calculated data size reaches the adaptive data writing threshold limit after writing at least a portion of the data stream in the dynamic high-performance NAND memory region 112, the memory controller 204 may be configured to migrate the remaining portion of the data stream to the low-performance NAND memory region 114 using Path 1 (PATH-1), i.e., via the dynamic high-performance NAND memory region 112.

In an embodiment, if the memory controller 204 identifies that the calculated data size reaches the adaptive data writing threshold limit after writing at least a portion of the data stream in the dynamic high-performance NAND memory region 112, the memory controller 204 may be configured to migrate the remaining portion of the data stream to the low-performance NAND memory region 114 using Path 2 (PATH-2), i.e., via the static high-performance NAND memory region 110.

In an embodiment, if the memory controller 204 identifies that the calculated data size reaches the adaptive data writing threshold limit after writing at least a portion of the data stream in the dynamic high-performance NAND memory region 112, the memory controller 204 may be configured to migrate the remaining portion of the data stream to the low-performance NAND memory region 114 using both Path 1 (PATH-1) and Path 2 (PATH-2), i.e., via both the dynamic high-performance NAND memory region 112 and the static high-performance NAND memory region 110.

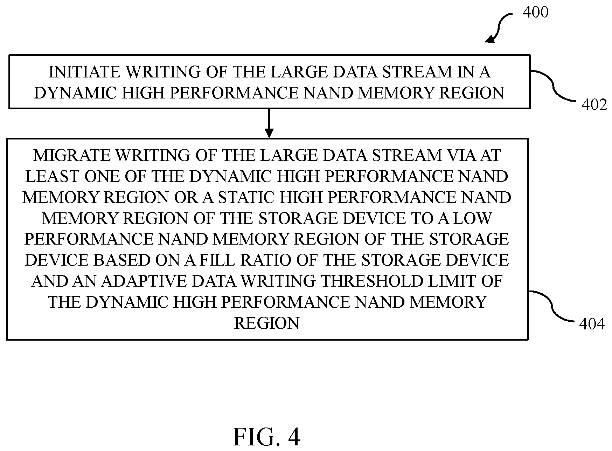

FIG. 4 depicts a flow diagram of a method for managing a large data stream in a storage device, in accordance with an embodiment. In an embodiment, a method 400 for managing large data stream in a storage device starts at operation 402. At operation 402, the method 400 may include initiating writing of the large data stream in a dynamic high-performance NAND memory region 112. In an embodiment, a memory controller 204 of Fig. 2 of the system 200 may be configured to carry out the process operation of operation 402.

At operation 404, the method 400 may include migrating writing of the large data stream via at least one of the dynamic high-performance NAND memory region 112 or a static high-performance NAND memory region 110 of the storage device 104 to a low-performance NAND memory region 114 of the storage device 104 based on a fill ratio of the storage device 104 and an adaptive data writing threshold limit of the dynamic high-performance NAND memory region 112. In an embodiment, to migrate the writing of the large data stream, the method 400 may include continuously calculating data size of the large data stream that has been written to the dynamic high-performance NAND memory region 112 during writing of the large data stream into the dynamic high-performance NAND memory region 112. If the calculated data size reaches the adaptive data writing threshold limit after writing at least a first portion of the large data stream in the dynamic high-performance NAND memory region 112, the method 400 may include migrating a remaining portion of the large data stream via at least one of the dynamic high-performance NAND memory region 112 or the static high-performance NAND memory region 110 to the low-performance NAND memory region 114. In an embodiment, the memory controller 204 of FIG. 2 of the system 200 may be configured to carry out the process operation of operation 404.

In an embodiment, the method 400 may include determining the fill ratio of the storage device 104. The fill ratio corresponds to real-time memory storage used relative to the total storage capacity of the storage device 104. In an embodiment, the method 400 may include determining available memory storage amount of the dynamic high-performance NAND memory region 112 based on the determined fill ratio, and determining adaptive data writing threshold limit based on the determined fill ratio and determined available memory storage amount of the dynamic high-performance NAND memory region 112. In an embodiment, the memory controller 204 of FIG. 2 of the system 200 may be configured to carry out the above process operations.

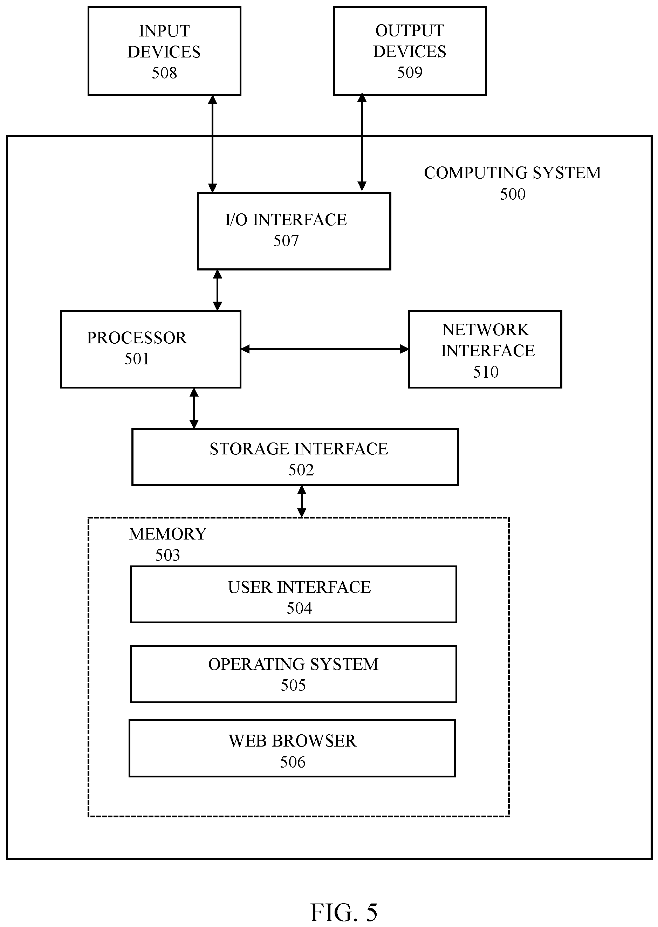

In an embodiment, the method 400 may include monitoring an order of writes in the large data stream and migrating writing of the large data stream via at least one of the dynamic high-performance NAND memory region 112 or a static high-performance NAND memory region 110 of the storage device 104 based on the monitored order. In an embodiment, the memory controller 204 of FIG. 2 of the system 200 may be configured to carry out the above process operations. FIG. 5 illustrates a block diagram of an exemplary computer system, in accordance with some embodiments. In an embodiment, a computer system 500 may correspond to the computing device 100 of FIG. 1. The computer system 500 may include a central processing unit ("CPU" or "processor") 501. The processor 501 may include at least one data processor for executing processes. The processor 501 may include specialized processing units such as, integrated system (bus) controllers, memory management control units, floating point units, graphics processing units, digital signal processing units, etc.

The processor 501 may be disposed in communication with one or more input devices 508 and one or more output devices 509 via input/output (I/O) interface 507. The I/O interface 507 may employ communication protocols/-methods such as, without limitation, audio, analog, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 507, the computer system 500 may communicate with the one or more input devices 508 and the one or more output devices 509. For example, the input devices 508 may be a camera device 103, antenna, keyboard, mouse, joystick, (infrared) remote control, card reader, fax machine, dongle, biometric reader, microphone, touch screen, touchpad, trackball, stylus, scanner, storage device, transceiver, video device/source, etc. The output devices 509 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processor 501 may be disposed in communication with external elements such as external computer systems, servers, network elements. The network interface 510 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc.

In some embodiments, the processor 501 may be disposed in communication with a memory 503 (e.g., RAM, ROM, etc.) via a storage interface 502. The storage interface 502 may connect to the memory 503 including, without limitation, memory drives, removable disc drives, etc., employing connection protocols such as, serial advanced technology attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc. in an embodiment, the memory 503 may be a computer readable storage medium, and may store a program which, when executed by the processor 501, may cause the processor 501 to execute migration described above. For example, the processor 501 may execute the program to cause the processor 501 to execute the operations of the method described above with respect to FIG. 4.

The memory 503 may store a collection of program or database components, including, without limitation, user interface 504, an operating system 505, a web browser 506 etc. In some embodiments, the computer system 500 may store user/application data, such as, the data, variables, records, etc., as described in this disclosure. Such databases may be implemented as fault-tolerant, relational, scalable, secure databases such as Oracle ® or Sybase®.

The operating system 505 may facilitate resource management and operation of the computer system 500. Examples of operating systems include, without limitation, APPLE MACINTOSH® OS X, UNIX®, UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™ OS/2, MICROSOFT™ WINDOWS™ (XP™, VISTA™/7/8, 10 etc.), APPLE® IOS™, GOOGLE® ANDROID™, BLACKBERRY® OS, or the like.

In some embodiments, the computer system 500 may implement a web browser 506 that stores program components. The web browser 506 may be a hypertext viewing application, such as MICROSOFT® INTERNET EXPLORER®, GOOGLE™ CHROME™, MOZILLA® FIREFOX®, APPLE® SAFARI®, etc. Secure web browsing may be provided using Secure Hypertext Transport Protocol (HTTPS), Secure Sockets Layer (SSL), Transport Layer Security (TLS), etc. Web browsers 506 may utilize facilities such as AJAX, DHTML, ADOBE® FLASH®, JAVASCRIPT®, JAVA®, Application Programming Interfaces (APIs), etc. In some embodiments, the computer system 500 may implement a mail server stored program component. The mail server may be an Internet mail server such as Microsoft Exchange, or the like. The mail server may utilize facilities such as Active Server Pages (ASP), ACTIVEX®, ANSI® C++/C#, MICROSOFT®, .NET, CGI SCRIPTS, JAVA®, JAVASCRIPT®, PERL®, PHP, PYTHON®, WEBOBJECTS®, etc. The mail server may utilize communication protocols such as Internet Message Access Protocol (IMAP), Messaging Application Programming Interface (MAPI), MICROSOFT® exchange, Post Office Protocol (POP), Simple Mail Transfer Protocol (SMTP), or the like. In some embodiments, the computer system 500 may implement a mail client stored program component. The mail client may be a mail viewing application, such as APPLE® MAIL, MICROSOFT® ENTOURAGE®, MICROSOFT® OUTLOOK®, MOZILLA® THUNDERBIRD®, etc.

According to various embodiments, the system and method utilize a adaptive data writing threshold limit and prioritize migration during idle times to ensure that sequential block queue data is efficiently moved to the low-performance NAND memory region 114. This approach supports burst sequential writes of approximately 5-10 GB while minimizing the migration of recent data. By optimizing the amount of data migrated to the low-performance NAND memory region 114, the system 200 reduces the impact on the read performance of recent data and enhances overall system efficiency.

In some embodiments, adaptive data writing threshold limits are applied to ensure that random data in high performance buffers is not prematurely migrated to the low-performance NAND memory region 114. This adaptive data writing threshold limit helps maintain fast read and write performance for various applications.

In some embodiments, adaptive data writing threshold limits are also used to reserve buffer space, preventing large sequential data streams from completely occupying high-performance NAND memory regions. This adaptive data writing threshold limit ensures that sufficient space is available for new random writes, maintaining balanced system performance.

In some embodiments, sustained writes of large data streams are confined to a single memory region before transitioning to the low-performance NAND memory region 114. This confinement prevents the mixing of different data ranges, reduces fragmentation, and enables perfect invalidations when data is overwritten.

The foregoing method descriptions and the process flow diagrams are provided merely as illustrative examples and are not intended to require or imply that the operations of the various embodiments must be performed in the order presented. As will be appreciated by one of skill in the art the order of operations in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

As used herein, the term "unit" may be implemented in hardware and/or in software. If the unit is implemented in hardware, the unit may be configured as a device, e.g., as a computer or as a processor or as a part of a system, e.g., a computer system. If the unit is implemented in software, the unit may be configured as a computer program product, as a function, as a routine, or as a program code.

Many modifications and other embodiments from the embodiments set forth herein will come to mind to one skilled in the art having the benefit of description presented above and in the associated drawings. Although the figures only show certain components of the apparatus and systems described herein, it is understood that various other components may be used in conjunction with the system. Therefore, it is to be understood that the various embodiments are not to be limited to the specific embodiments disclosed and that modifications and other embodiments are intended to be included within the scope of the appended claims. Moreover, the operations in the method described above may not necessarily occur in the order depicted in the accompanying diagrams, and in some cases one or more of the operations depicted may occur substantially simultaneously, or additional operations may be involved. Although specific terms are employed herein, they are used in a generic and descriptive sense only and not for purposes of limitation.

The various illustrative logical blocks, modules, circuits, and algorithm operations described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure as defined in the appended claims.

**Claims**

1. A method comprising:

   initiating writing of a large data stream in a dynamic high-performance NAND memory region (112) of a storage device (104); and
   migrating, via at least one of the dynamic high-performance NAND memory region (112) or a static high-performance NAND memory region (110) of the storage device (104), writing of the large data stream to a low-performance NAND memory region (114) of the storage device (104) based on a fill ratio of the storage device (104) and an adaptive data writing threshold limit of the dynamic high-performance NAND memory region (112).

2. The method as claimed in claim 1, further comprising:

   determining the fill ratio of the storage device (104), the fill ratio corresponding to an amount of memory storage used in real time relative to a total storage capacity of the storage device (104);
   determining an available memory storage amount of the dynamic high-performance NAND memory region (112) based on the fill ratio that is determined; and
   determining the adaptive data writing threshold limit based on the fill ratio and the available memory storage amount of the dynamic high-performance NAND memory region (112).

3. The method as claimed in claim 2, wherein:

   in response to the fill ratio being within a first range, the available memory storage amount is determined to be greater than or equal to a first value, and
   in response to the fill ratio being within a second range, the available memory storage amount is determined to be a second value.

4. The method as claimed in any one of claims 1 to 3, wherein the migrating further comprises:

   continuously calculating a data size of the large data stream that has been written to the dynamic high-performance NAND memory region (112) during writing of the large data stream into the dynamic high-performance NAND memory region (112);
   comparing the data size with the adaptive data writing threshold limit; and
   migrating the writing of the large data stream to the low-performance NAND memory region (114) based on a result of the comparing.

5. The method as claimed in claim 4, wherein migrating the writing of the large data stream to the low-performance NAND memory region (114) comprises:
   based on the data size reaching the adaptive data writing threshold limit subsequent to writing at least a first portion of the large data stream in the dynamic high-performance NAND memory region (112):
   migrating a remaining portion of the large data stream via at least one of the dynamic high-performance NAND memory region (112) or the static high-performance NAND memory region (110) to the low-performance NAND memory region (114).

6. The method as claimed in claim 5, wherein migrating the writing of the large data stream to the low-performance NAND memory region (114) comprises:
   based on the data size having not reached the adaptive data writing threshold limit subsequent to writing the at least a first portion of the large data stream in the dynamic high-performance NAND memory region (112), continuing the continuously calculating the data size.

7. The method as claimed in any one of claims 1 to 6, further comprising:

   monitoring an order of writes in writing the large data stream; and
   migrating the writing of the large data stream to the low-performance NAND memory region (114) via the at least one of the dynamic high-performance NAND memory region (112) or the static high-performance NAND memory region (110) of the storage device (104) based on the order to preserve the order in the low-performance NAND memory region (114) upon a completion of the migrating.

8. A system comprising:
   a memory controller (108) configured to:

   initiate writing of a large data stream in a dynamic high-performance NAND memory region (112) of a storage device (104); and
   migrate, via at least one of the dynamic high-performance NAND memory region (112) or a static high-performance NAND memory region (110) of the storage device (104), writing of the large data stream to a low-performance NAND memory region (114) of the storage device (104), based on a fill ratio of the storage device (104) and an adaptive data writing threshold limit of the dynamic high-performance NAND memory region (112).

9. The system as claimed in claim 8, wherein the memory controller (108) is further configured to:

   determine the fill ratio of the storage device (104), the fill ratio corresponding to an amount of memory storage used in real time relative to a total storage capacity of the storage device (104);
   determine an available memory storage amount of the dynamic high-performance NAND memory region (112) based on the fill ratio that is determined; and
   determine the adaptive data writing threshold limit based on the fill ratio and the available memory storage amount of the dynamic high-performance NAND memory region (112).

10. The system as claimed in claim 8 or 9, wherein, to migrate the writing of the large data stream, the memory controller (108) is further configured to:

    continuously calculate a data size of the large data stream that has been written to the dynamic high-performance NAND memory region (112) during writing of the large data stream into the dynamic high-performance NAND memory region (112);
    compare the data size with the adaptive data writing threshold limit; and
    migrate the writing of the large data stream to the low-performance NAND memory region (114) based on a result of the comparison.

11. The system as claimed in claim 10, wherein, to migrate the writing of the large data stream, the memory controller (108) is further configured to:

    based on the data size reaches the adaptive data writing threshold limit in response to writing at least a first portion of the large data stream in the dynamic high-performance NAND memory region (112),
    migrate a remaining portion of the large data stream via the at least one of the dynamic high-performance NAND memory region (112) or the static high-performance NAND memory region (110) to the low-performance NAND memory region (114).

12. The system as claimed in claim 11, wherein, to migrate the writing of the large data stream, the memory controller (108) is further configured to:
    based on the data size has not reached the adaptive data writing threshold limit in response to writing the at least a first portion of the large data stream in the dynamic high-performance NAND memory region (112), continue the continuous calculation of the data size.

13. The system as claimed in any one of claims 8 to 12, wherein the memory controller (108) is further configured to:

    monitor an order of writes in writing the large data stream; and
    migrate the writing of the large data stream to the low-performance NAND memory region (114) via the at least one of the dynamic high-performance NAND memory region (112) or the static high-performance NAND memory region (110) of the storage device (104) based on the order to preserve the order in the low-performance NAND memory region (114) upon completion of the migration.

14. A non-transitory computer readable storage medium storing a program which, when executed by a processor, cause the processor to perform the method according to any one of claims 1 to 7.

100

STORAGE DEVICE
104

SYSTEM
102

MEMORY
CONTROLLER
108

STATIC HIGH
PERFORMANCE NAND
MEMORY REGION
110

DYNAMIC HIGH
PERFORMANCE NAND
MEMORY REGION
112

LOW PERFORMANCE
NAND MEMORY
REGION
114

MEMORY DEVICES
106

FIG. 1

200

MEMORY
202

MEMORY CONTROLER
204

FIG. 2

300

110

114

| USED SPACE | FREE SPACE |
| --- | --- |

PATH-2

| USED SPACE | FREE SPACE |
| --- | --- |

PATH-2

PATH-1

| MEMORY CONTROLER 204 |
| --- |

PATH-1

| USED SPACE | FREE SPACE | RANDOM DATA |
| --- | --- | --- |

ADAPTIVE DATA WRITING THRESHOLD LIMIT

112

FIG. 3

400

INITIATE WRITING OF THE LARGE DATA STREAM IN A
DYNAMIC HIGH PERFORMANCE NAND MEMORY REGION

402

MIGRATE WRITING OF THE LARGE DATA STREAM VIA AT
LEAST ONE OF THE DYNAMIC HIGH PERFORMANCE NAND
MEMORY REGION OR A STATIC HIGH PERFORMANCE NAND
MEMORY REGION OF THE STORAGE DEVICE TO A LOW
PERFORMANCE NAND MEMORY REGION OF THE STORAGE
DEVICE BASED ON A FILL RATIO OF THE STORAGE DEVICE
AND AN ADAPTIVE DATA WRITING THRESHOLD LIMIT OF
THE DYNAMIC HIGH PERFORMANCE NAND MEMORY
REGION

404

FIG. 4

FIG. 5

Europäisches
Patentamt
European
Patent Office
Office européen
des brevets

# EUROPEAN SEARCH REPORT

**Application Number**

EP 25 19 1228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2020/167089 A1 (NATARAJAN SHANKAR [US] ET AL) 28 May 2020 (2020-05-28)<br>* abstract *<br>* paragraph [0022] - paragraph [0081] *<br>* claims *<br>* figures *<br>----- | 1-4,<br>8-10,14<br>5-7,<br>11-13 | INV.<br>G06F12/02 |
| A | IM S ET AL: "ComboFTL: Improving performance and lifespan of MLC flash memory using SLC flash buffer",<br>JOURNAL OF SYSTEMS ARCHITECTURE, ELSEVIER BV, NL,<br>vol. 56, no. 12,<br>1 December 2010 (2010-12-01), pages 641-653, XP027526102,<br>ISSN: 1383-7621<br>[retrieved on 2010-09-24]<br>* abstract *<br>* page 644 - page 651 *<br>----- | 1-14 | |
| Y | US 2021/249071 A1 (TANPAIROJ KULACHET [US] ET AL) 12 August 2021 (2021-08-12)<br>* abstract *<br>* paragraph [0027] - paragraph [0028] *<br>* claims *<br>* figures *<br>----- | 5-7,<br>11-13 | **TECHNICAL FIELDS SEARCHED (IPC)**<br><br>G06F |

The present search report has been drawn up for all claims

| Place of search | Date of completion of the search | Examiner |
|---|---|---|
| The Hague | 4 November 2025 | Mandato, Davide |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................

& : member of the same patent family, corresponding
document

## ANNEX TO THE EUROPEAN SEARCH REPORT
## ON EUROPEAN PATENT APPLICATION NO.

EP 25 19 1228

This annex lists the patent family members relating to the patent documents cited in  the above-mentioned European search report.
The members are as contained in the European Patent Office EDP file on
The European Patent Office is in no way liable for these particulars which are merely given for the purpose of information.

04-11-2025

| Patent document cited in search report | Publication date | Patent family member(s) | Publication date |
|---|---|---|---|
| US 2020167089 A1 | 28-05-2020 | NONE | |
| US 2021249071 A1 | 12-08-2021 | US 2021035627 A1 | 04-02-2021 |
| | | US 2021249071 A1 | 12-08-2021 |

EPO FORM P0459

For more details about this annex : see Official Journal of the European Patent Office, No. 12/82